# EUROPÄISCHE PATENTSCHRIFT

(11) **EP 1 827 761 B1**
(45) Veröffentlichungstag und Bekanntmachung des Hinweises auf die Patenterteilung: **16.04.2008**
(21) Anmeldenummer: 05813751.4
(22) Anmeldetag: 07.12.2005
(51) Int. Cl.: B24B 45/00, B24D 5/16, B24D 7/16, B24D 13/20, F16B 2/06, F16B 2/10, F16B 2/18

(54) **SPANNVORRICHTUNG MIT ZENTRIERVORRICHTUNG AN EINEM SCHLEIFSPINDELROTOR UND ROTATIONSTEIL MIT EINER DERARTIGEN ZENTRIERVORRICHTUNG**
CLAMPING DEVICE COMPRISING A CENTRING DEVICE ON A GRINDING SPINDLE ROTOR, AND ROTARY PART COMPRISING ONE SUCH CENTRING DEVICE
DISPOSITIF DE SERRAGE COMPORTANT UN SYSTEME DE CENTRAGE SUR UN ROTOR DE BROCHE PORTE-MEULE ET ELEMENT ROTATIF COMPORTANT UN TEL SYSTEME DE CENTRAGE

(30) Priorität: 22.12.2004 DE 102004061871
(43) Veröffentlichungstag der Anmeldung: 05.09.2007
(73) Patentinhaber: Erwin Junker Maschinenfabrik GmbH, 77787 Nordrach (DE)
(72) Erfinder: HIMMELSBACH, Georg, 77716 Haslach (DE)
(74) Vertreter: Leske, Thomas
(86) Internationale Anmeldenummer: PCT/EP2005/013124
(87) Internationale Veröffentlichungsnummer: WO 2006/072324

(56) Entgegenhaltungen:
- DE-A1- 19 615 527
- DE-C1- 3 322 258

## Beschreibung

Die Erfindung betrifft eine Spannvorrichtung an einem Schleifspindelrotor nach dem Oberbegriff von Anspruch 1 sowie ein Rotationsteil mit Zentriervorrichtung nach Oberbegriff von Anspruch 13. Eine derartige Spannvorrichtung ist aus der DE 33 22 258 C1 bekannt. Das Anwendungsgebiet derartiger Spannvorrichtungen und Schleifspindelrotoren sind vor allem Rund- und Unrundschleifmaschinen nach Art von Universalschleifmaschinen, mit denen hochwertige Maschinenbauteile geschliffen werden. Hierbei wird höchste Maßhaltigkeit in Verbindung mit einwandfreier Oberflächengüte verlangt. Ein besonders wichtiges Beispiel sind die Schleifmaschinen in der Serienfertigung zum Schleifen von Wellenteilen sowie Nocken- und Kurbelwellen. Aber auch andere Schleifmaschinen kommen in Frage, wenn hohe Anforderungen an das Schleifergebnis gestellt werden.

Im Falle der DE 33 22 258 C1 ist das auf dem Schleifspindelrotor aufzuspannende Rotationsteil eine Schleifscheibe, die aus einem Grundkörper und einem umfangsseitig darauf aufgebrachten Schleifbelag besteht. Der Grundkörper der Schleifscheibe hat eine Innenausnehmung, von der drei Nuten radial nach außen ausgehen. Diese drei Nuten befinden sich in einem regelmäßigen Winkelabstand von 120 Grad voneinander. Mit dieser Innenausnehmung wird das Rotationsteil auf einen Zentrierabschnitt des Schleifspindelrotors aufgeschoben und dort in axialer Richtung zwischen einem Anlageflansch des Schleifspindelrotors und einem Spannflansch festgespannt. Der Zentrierabschnitt hat eine im Wesentlichen zylindrische Grundform, wobei jedoch vom Außenumfang des Zentrierabschnittes drei gleichmäßig beabstandete Keile in radialer Richtung nach außen vorstehen. Der Außendurchmesser der Keile entspricht dem Innendurchmesser der Innenausnehmung im Rotationsteil außerhalb der achsparallelen Nuten. Die Keile bilden somit drei Anlagekörper, mit denen der Zentrierabschnitt zentrierend an der Innenausnehmung des Rotationsteiles anliegt.

Mit dieser bekannten Spannvorrichtung soll ein leichtes Aufschieben des Rotationsteiles auf den Zentrierabschnitt in Verbindung mit einer genauen Zentrierung erreicht werden. Zum Aufschieben werden nämlich die Nuten des Rotationsteiles auf die Keile des Zentrierabschnittes ausgerichtet. Die Keile haben einen größeren radialen Abstand vom Nutengrund der in der Innenausnehmung des Rotationsteiles ausgebildeten Nuten. Da die Keile zudem eine geringere Umfangserstreckung als die Nuten haben, ist ein Aufschieben des Rotationsteiles auf den Zentrierabschnitt bei exakter Winkelausrichtung naturgemäß leicht möglich. Sobald der Rotationskörper mit einer Planseite an dem Anlageflansch des Schleifspindelrotors anliegt, wird der Rotationskörper verdreht, so dass die Keile nunmehr mit einer geeigneten Passung an der zylindrischen Innenausnehmung des Rotationsteiles anliegen, die einen kleineren Durchmesser hat als der Nutengrund der drei Nuten. Der Rotationskörper ist damit auf dem Zentrierabschnitt sicher zentriert.

Die Spannvorrichtung gemäß der DE 33 22 258 C1 erfüllt ihren Zweck und hat sich in der Praxis bewährt. Jedoch muss beim Aufschieben des Rotationskörpers auf den Zentrierabschnitt auf die genaue Winkelausrichtung beider Teile geachtet werden. Zudem erfordert die geeignete Passung zwischen den drei Keilen, die die Anlagekörper bilden, und dem Innendurchmesser der Innenausnehmung noch immer einen Kompromiss. Einerseits soll ein genaues Zentrieren erfolgen, somit eine möglichst enge Passung vorliegen. Andererseits soll aber das Befestigen, zu dem auch das zuletzt erfolgende Verdrehen gehört, möglichst leicht erfolgen. Es besteht somit ein Bedürfnis, nach einer noch leichteren Bedienbarkeit der bekannten Spannvorrichtung bei möglichst noch präziserer Genauigkeit der Zentrierung.

In DE 34 05 556 C1 ist eine Spannvorrichtung für einen Schleifring beschrieben, welcher einen an einem Tragflansch lösbar befestigten Spannflansch aufweist. Der Tragzapfen, auf welchen der Schleifring aufgesetzt und zu verspannen ist, weist mehrere über seine Länge verlaufende und dabei in radialer Richtung vorspringende Keile auf. In der Innenbohrung des Schleifringes sind entsprechend geformte Nuten ausgebildet, welche den jeweiligen Keilen zugeordnet sind. Die vorspringenden Keile weisen im Querschnittsprofil die Kontur eines Kreisbogens mit einem Radius auf, dessen Krümmungsmittelpunkt um eine Exzentrizität vom Mittelpunkt des Tragzapfens versetzt ist. Damit ist zwar aufgrund von relativ weiten radialen Toleranzen ein genaues Zentrieren mit engem Spiel möglich, fertigungstechnisch ist die Herstellung eines kreisbogenförmigen Keiles an der Kontur, dessen Krümmungsmittelpunkt exzentrisch angeordnet ist, jedoch aufwendig und anspruchsvoll, zumal in der Innenbohrung des Schleifringes ebenfalls entsprechende dazu passende Ausnehmungen vorgesehen sein müssen.

Der Erfindung liegt daher die Aufgabe zugrunde, die bekannte Spannvorrichtung gemäß dem Oberbegriff des Anspruchs 1 in der Weise zu verbessern, dass ein Zusammenfügen von Schleifspindelrotor und Rotationsteil möglichst einfach und mit geringem Kraftaufwand vor sich geht, während zugleich die Zentrierung absolut sicher und mit höchster Genauigkeit erfolgt. Des weiteren soll eine möglichst kostengünstige Herstellung erfolgen, insbesondere bei breiten Schleifscheiben oder breiten Schleifscheibensätzen mit dafür erforderlichen langen Zentrierabschnitten.

Zur Lösung dieser Aufgabe sind bei der Spannvorrichtung nach dem Oberbegriff des Anspruchs 1 die Lösungsmerkmale gemäß dem kennzeichnenden Teil des Anspruchs 1 vorgesehen.

Bei der erfindungsgemäßen Spannvorrichtung wird die Voraussetzung für eine hohe Genauigkeit beim Zentrieren durch die beiden als feste Vorsprünge ausgebildeten Anlagekörper geschaffen, die in die Innenausnehmung des Rotationsteiles hineinragen. Diese festen Vorsprünge werden vorzugsweise durch Koordinaten-Schleifen erzeugt, wobei der Rotationskörper nach seiner Montage auf einem Schleifspindelrotor eine Rundlaufgenauigkeit von vorzugsweise ≤ 2 µm aufweist. Der dritte Anlagekörper hingegen ist in dem Rotationsteil beweglich gelagert und bildet ein Anstellglied, das zwischen zwei Stellungen beweglich ist. Zum Aufschieben des Rotationsteiles auf den Zentrierabschnitt wird das Anstellglied in radialer Richtung nach außen in das Rotationsteil eingefahren oder eingezogen. Die Innenausnehmung des Rotationsteiles bildet dann in diesem Bereich einen freien Querschnitt, wodurch auch ein großes radiales Spiel zwischen der Innenausnehmung und dem Zentrierabschnitt gewährleistet ist. Das Rotationsteil kann somit leicht und in beliebiger Winkelausrichtung zum Zentrierabschnitt auf diesen aufgeschoben werden. Sobald das Rotationsteil seine endgültige axiale Stellung erreicht hat, kann es - gleichfalls bei beliebiger Winkelstellung - in dieser Stellung zentrierend festgespannt werden. Das erfolgt, indem das beweglich gelagerte Anstellglied in seine zweite Stellung überführt wird, in der es radial nach innen aus dem Rotationsteil ausgefahren ist und an dem Zentrierabschnitt anliegt. Vorzugsweise ist das Anstellglied selbsthemmend, insbesondere als selbsthemmende Nockenscheibe mit einem Nocken mit geringer Steigung, ausgebildet. Es ist jedoch auch möglich, dass das Anstellglied feststellbar ausgebildet ist, d.h. es wird nach seiner Anlage an dem Zentrierabschnitt in dieser Position festgestellt.

Da die Genauigkeit ohnehin schon durch die beiden als feste Vorsprünge ausgebildeten Anlagekörper gewährleistet ist, braucht mit dem beweglich gelagerten Anstellglied nur noch das sichere und symmetrische Anliegen des Rotationsteiles an dem zylindrischen Zentrierabschnitt erreicht zu werden. Die Vorteile der Dreipunkt-Abstützung gemäß dem eingangs genannten Stand der Technik bleiben dabei erhalten. Sie bestehen insbesondere in der statisch bestimmten - aber nicht überbestimmten - Abstützung durch drei Anlagekörper. Die Wirkungslinie des beweglich gelagerten Anstellgliedes sollte dabei in der Winkelhalbierenden zu den beiden festen Vorsprüngen liegen; im einfachsten Fall wird wieder ein gegenseitiger Winkelabstand von vorzugsweise 120 Grad für alle Anlagekörper gewählt. Je nach Anwendungsfall sind jedoch andere Winkelabstände möglich, die Wirkungslinie des Anstellgliedes befindet sich jedoch vorzugsweise in der Winkelhalbierenden. Im Vergleich zum Stand der Technik ist die Handhabung jedoch wesentlich erleichtert, weil zum Zusammenfügen und Auseinandernehmen nicht mehr auf eine exakte Winkelstellung und ein passgenaues Verdrehen des Rotationsteiles gegenüber dem Zentrierabschnitt geachtet werden muss. Die Höhe des Anpressdruckes zwischen den Anlagekörpern und dem Zentrierabschnitt wird allein durch die Einstellung des beweglich gelagerten Anstellgliedes bestimmt und bleibt ohne Einfluss auf das Zusammenfügen von Rotationsteil und Zentrierabschnitt. Zudem ergeben sich fertigungstechnische Vorteile, weil der Zentrierabschnitt mit durchgehend glatter zylindrischer Kontur ohne Vorsprünge oder Nuten ausgebildet sein kann. Der zylindrische Zentrierabschnitt kann daher ohne Weiteres auf Durchmesserwerte geschliffen werden, deren Genauigkeit im µm-Bereich liegt. Die bessere Handhabbarkeit der erfindungsgemäßen Spannvorrichtung wirkt sich besonders dann aus, wenn der Rotationskörper und der Zentrierabschnitt eine größere axiale Erstreckung haben, wie das bei walzenförmigen Schleifkörpern oder solchen Schleifkörpern der Fall ist, die aus einer Vielzahl von beabstandeten einzelnen Schleifscheiben aufgebaut sind. Letzteres kommt beim Schleifen von Wellenteilen und Nocken- und Kurbelwellenschleifen in Frage. Die Erfindung lässt sich besonders gut bei CBN- und Diamant-Schleifscheiben anwenden.

Vorteilhafte Ausgestaltungen der erfindungsgemäßen Spannvorrichtung sind in den Unteransprüchen 2 bis 12 angegeben.

So lässt sich das beweglich gelagerte Anstellglied vorteilhaft in Form einer Nockenscheibe ausbilden, die in dem Rotationsteil mit parallel zu dessen Rotationsachse verlaufender Drehachse gelagert ist und eine Eingriffsöffnung zum stirnseitigen Einführen eines Verdrehwerkzeuges aufweist. Eine derartige Nockenscheibe ist ein preiswert herzustellendes flaches Bauteil, das in einer Ausnehmung des Rotationsteils mit geringem Abstand zu der Innenkontur dieser Ausnehmung gelagert werden kann und beispielsweise mit einem Steckschlüssel (Inbus-Schlüssel) leicht zu verdrehen ist, der in die Eingriffsöffnung der Nockenscheibe eingeführt wird. Ein derartiges flaches Bauteil, das nur einen geringen Abstand zu der umgebenden Ausnehmung haben muss, bedeutet nur eine geringe Störung der rotatorisch gleichmäßig verteilten Masse in dem Rotationswerkzeug, so dass die möglichen Auswirkungen auf eine störende Unwucht leicht ausgeglichen werden können. Um hier die Massenunwucht auf ein Minimum zu reduzieren, werden Schleifscheiben und Zwischenringe nach deren Herstellung ausgewuchtet.

Eine besonders einfache Ausgestaltung mit einer Nockenscheibe als Anstellglied lässt sich weiterhin dadurch erzielen, dass die Nockenscheibe mit ihrer Außenkontur auf zwei Lagerstiften abgestützt ist, die parallel zur Rotationsachse des Rotationsteiles in diesem angeordnet sind. Derartige Lagerstifte sind leicht und ebenfalls ohne größere Störung der Massenverhältnisse in dem Rotationsteil anzubringen. Die Nockenscheibe ruht bei dieser Ausbildung auf den Lagerstiften und braucht keine baulich ausgebildete Drehachse.

Eine andere vorteilhafte Ausgestaltung des Anstellgliedes kann darin bestehen, dass dieses ein Stift ist, der in einer radial verlaufenden Bohrung des Rotationsteiles verschiebbar gelagert und durch eine Druckfeder nach innen in die Innenausnehmung hinein vorgespannt ist. Durch die Wahl der Druckfeder wird der Anpressdruck eingestellt, mit dem die festen Vorsprünge und das Anstellglied an dem zylindrischen Zentrierabschnitt anliegen. Der Stift wird dadurch in seine unwirksame Stellung überführt, dass an ihm ein Schwenkhebel angreift, der in dem Rotationsteil mit parallel zu dessen Rotationsachse verlaufender Schwenkachse gelagert ist und eine Eingriffsöffnung zum stirnseitigen Einführen eines Verdrehwerkzeuges aufweist. Vor dem Zusammenfügen der Teile wird somit ein Verdrehwerkzeug wie z.B. ein Inbus-Schlüssel oder ein anderer Steckschlüssel in die Eingriffsöffnung des Schwenkhebels eingeführt und der Stift durch Verdrehen des Schwenkhebels nach außen zurückgezogen. Das Rotationsteil kann dann leicht auf den Zentrierabschnitt aufgeschoben werden, wonach die Druckfeder wieder freigegeben wird und der Stift pressend an dem Zentrierabschnitt anliegt. Es ist auch möglich, dass das Anstellglied mit seiner zugehörigen Druckfeder in der Art eines Taststiftes wirkt. In einem solchen Fall wird das Rotationsteil derart auf den Zentrierabschnitt des Schleifspindelrotors aufgeschoben, dass die zwei festen Vorsprünge oben auf dem Zentrierabschnitt des Schleifspindelrotors anliegen und durch die Schwerkraft in dieser Anlageposition verbleiben, wobei an der Unterseite des Zentrierabschnittes das Anstellglied infolge der Federkraft am Zentrierabschnitt ebenfalls anliegt, so dass die Zentrierung des Rotationsteiles am Zentrierabschnitt des Schleifspindelrotors gegeben ist.

Eine fertigungstechnisch vorteilhafte Konstruktion ergibt sich für beide der genannten Ausführungen, indem die erforderlichen Ausnehmungen für die Nockenscheibe oder den Schwenkhebel nach außen durch einen Deckel abgedeckt werden, der eine Durchgriffsöffnung für das Verdrehwerkzeug aufweist. Der Deckel kann mit Befestigungsschrauben an dem Rotationsteil befestigt werden und damit zugleich als Feststellglied dienen, das die Lage bzw. Stellung der Nockenscheibe oder des Schwenkhebels fixiert.

Die erfindungsgemäße Spannvorrichtung kann nicht nur an Schleifscheiben, wie sie in der DE 33 22 258 C1 dargestellt sind, verwirklicht werden. Sie kommt in gleicher Weise auch für Zwischenringe in Frage, die sich zwischen den einzelnen Schleifscheiben eines aus mehreren Schleifscheiben aufgebauten zylinderförmigen Schleifkörpers befinden. Da hierbei die einzelnen Schleifscheiben und Zwischenringe über die größere axiale Erstreckung des Zentrierabschnittes hinweg verschoben werden müssen, wenn die Schleifscheiben und Zwischenringe aufgebracht oder entfernt werden, wirken sich die Vorteile der erfindungsgemäßen Spannvorrichtung in ganz besonderer Weise aus.

Die beiden festen Vorsprünge des Rotationsteiles werden vorteilhaft einstückig mit diesem ausgebildet und erhalten die Form von axial verlaufenden Erhebungen, die im Querschnitt eine gewölbte Form aufweisen. Die gewölbte Form ist vor allem für das einfache Einsetzen und Verdrehen des Rotationsteiles von Bedeutung, weil dabei keine Rücksicht auf eine besondere Winkelstellung genommen werden muss. Außerdem ergibt sich dabei eine annähernd linienförmige Berührung zwischen den festen Vorsprüngen des Rotationsteiles und dem zylindrischen Zentrierabschnitt, im Gegensatz zu der flächigen Anlage beim Stand der Technik. Die Annäherung an das Prinzip der Dreipunkt-Abstützung wird damit noch perfekter.

Aus Gründen eines exakt definierten Berührungspunktes wird gemäß einer weiteren vorteilhaften Ausgestaltung vorgesehen, dass das Anstellglied - in Richtung auf die Rotationsachse des Rotationsteiles - eine ballige Kontur hat.

Bei dem Ausführungsbeispiel mit einem als Nockenscheibe ausgebildeten Anstellglied ist diese Nockenscheibe im Grundkörper des Rotationsteiles mit einem gewissen Hinterschnitt angeordnet, d.h. der Nocken ist geringfügig tiefer als sein Radius in den Grundkörper des Rotationsteiles "eingetaucht".

Gemäß einem weiteren Aspekt der Erfindung, welcher in Anspruch 13 definiert ist, weist ein erfindungsgemäßes Rotationsteil, insbesondere eine Schleifscheibe, eine darin integrierte Zentriereinrichtung auf. Diese Zentriereinrichtung ist in den Grundkörper des Rotationsteiles integriert und weist zwei feste Vorsprünge und einen im Wesentlichen zu den festen Vorsprüngen gegenüberliegenden verstellbaren Anlagekörper in Form eines Anstellgliedes auf. Die beiden festen Vorsprünge sind vorzugsweise integral mit dem Grundkörper des Rotationsteiles in dessen Innenausnehmung hineinragend angeordnet und dienen einer vorzugsweise linienförmigen oder punktförmigen Abstützung am Zentrierabschnitt des Schleifspindelrotors, wobei der dritte, verstellbare Anlagekörper dazu gegenüberliegend angeordnet ist und im Sinne einer Dreibereichslagerung die dritte Abstützung am Zentrierabschnitt des Schleifspindelrotors bildet.

Vorzugsweise ist das Rotationsteil eine Schleifscheibe, welche vorzugsweise in Kompositbauweise ausgebildet ist. Dabei ist ein Innenring vorgesehen, welcher in seiner Innenausnehmung die festen Vorsprünge ausgebildet hat und in welchem der dritte, verstellbare Anlagekörper zur Anstellung an den Zentrierabschnitt des Schleifspindelrotors aufgenommen ist. Der Innenring ist vorzugsweise aus Metall ausgebildet, wohingegen der restliche Grundkörper der Schleifscheibe aus Kunststoff oder beispielsweise Aluminium aufgebaut sein kann, wobei an seinem Außenumfang ein Schleifbelag vorgesehen ist. Es ist jedoch auch möglich, dass der Innenring aus Metall mit der Zentriereinrichtung an seinem äußeren einen kompletten Grundkörper aus Korund trägt.

Die Erfindung wird anschließend anhand von in der Zeichnung dargestellten Ausführungsbeispielen noch näher erläutert. In den Figuren ist das Folgende dargestellt:
Figur 1 zeigt die erfindungsgemäße Spannvorrichtung in einem Längsschnitt.
In Figur 2 ist eine erste Ausführungsform dargestellt, bei der das beweglich gelagerte Anstellglied in Form einer Nockenscheibe ausgebildet ist.
Figur 3 enthält eine vergrößerte Darstellung gemäß dem Schnitt A-A nach Figur 2.
Figur 4 veranschaulicht eine abgewandelte Ausführungsform des beweglich gelagerten Anstellgliedes.
Figur 5 zeigt in einem Längsschnitt einen mehrteiligen Schleifkörper, bei dem die erfindungsgemäße Spannvorrichtung mehrfach verwendet wird.
Figur 6 zeigt eine in Kompositbauweise ausgeführte Schleifscheibe mit einem metallischen Innenring als Teil ihres Grundkörpers.

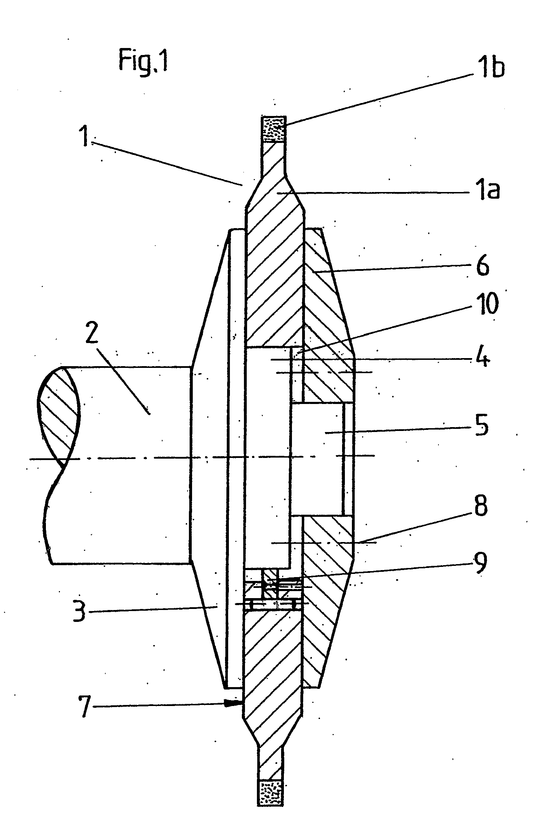

In dem Längsschnitt nach Figur 1 ist mit der Bezugsziffer 1 ein Rotationsteil bezeichnet, das auf dem Schleifspindelrotor 2 zentrierend aufgespannt werden soll. Das Rotationsteil 1 ist in diesem Fall eine Schleifscheibe, die aus einem Grundkörper 1a und einem diesen umfangsseitig umgebenden Schleifbelag 1b besteht. Die Schleifscheibe kann als CBN- oder Diamant-Schleifscheibe ausgeführt sein. Dabei ist die Art ihrer Bindung nicht wesentlich, so dass sämtliche übliche Bindungen wie beispielsweise durch Keramik, Kunstharz oder Metall möglich sind. Auch galvanisch belegte CBN-Schleifscheiben kommen in Frage. Für die erfindungsgemäße Spannvorrichtung ist vor allem der Grundkörper 1a der Schleifscheibe von Bedeutung, der im Allgemeinen auf metallischer Basis hergestellt wird. Heute ebenfalls verbreitete Werkstoffe mit Verstärkung durch Kunststoff oder Kohlefasern sind bei der erfindungsgemäßen Spannvorrichtung aber gleichfalls geeignet.

Der Schleifspindelrotor 2 bildet eine rotierende Antriebswelle und weist einen Anlageflansch 3, einen zylindrischen Zentrierabschnitt 4 sowie einen Zentrierbund 5 auf. Auf dem Zentrierbund 5 wird ein Spannflansch 6 zentrierend aufgeschoben und mittels Spannschrauben 8 befestigt, von denen hier lediglich eine mit ihrer Mittellinie angedeutet ist.

Zwischen dem Anlageflansch 3 und dem Spannflansch 6 wird der Grundkörper 1a der Schleifscheibe beim Festziehen der Spannschrauben 8 in axialer Richtung festgespannt, wobei eine Planseite 7 des Grundkörpers 1a an dem Anlageflansch 3 kraftschlüssig zu liegen kommt.

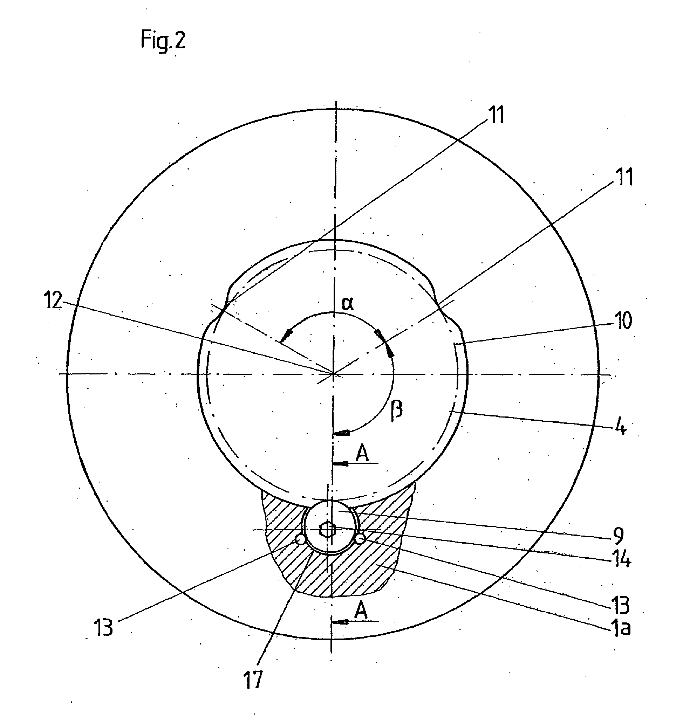

Die Figur 2 zeigt einen Ausschnitt aus dem Grundkörper 1a in einer Ansicht senkrecht zum Längsschnitt gemäß der Figur 1. Danach hat der Grundkörper 1a eine Innenausnehmung 10 von im Wesentlichen kreisförmiger Gestalt. Jedoch stehen zwei feste Vorsprünge 11 als Anlagekörper nach innen in die Innenausnehmung vor. Die festen Vorsprünge sind einstückig mit dem Grundkörper 1a ausgebildet und haben die Form von axial verlaufenden relativ flachen Erhebungen. Diese Erhebungen sind im Querschnitt flach gewölbt, wie Figur 2 deutlich erkennen lässt.

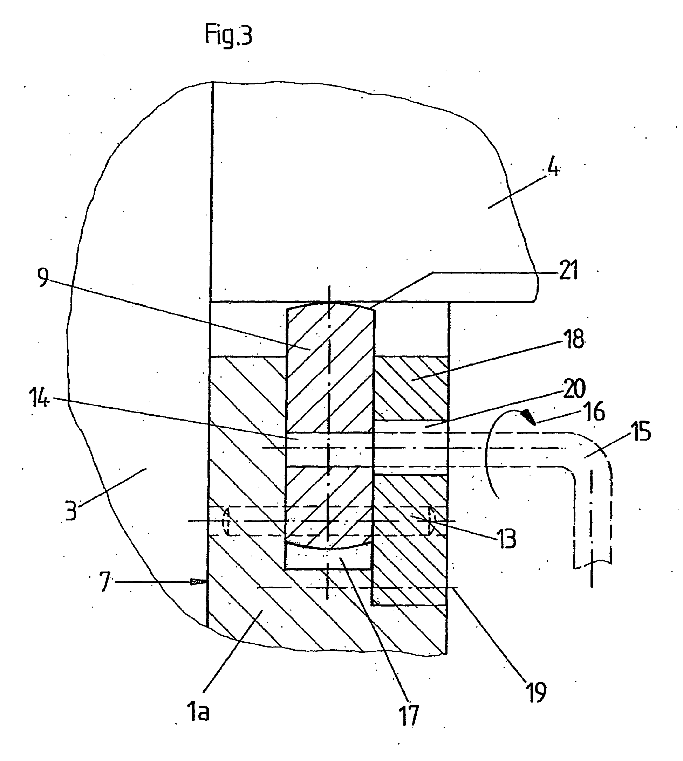

Als dritter Anlagekörper dient das beweglich gelagerte Anstellglied, das in Figur 2 als Nockenscheibe 9 ausgebildet ist. Die Nockenscheibe 9 ist in einer taschenförmigen Ausnehmung 17 des Grundkörpers 1a mit einem gewissen Hinterschnitt angeordnet und stützt sich auf zwei Lagerstiften 13 ab, die parallel zur Rotationsachse 12 des Grundkörpers 1a verlaufend in diesem angeordnet sind. Die Nockenscheibe 9 hat eine Eingriffsöffnung 14, in die ein Verdrehwerkzeug 15 eingesetzt werden kann. Einzelheiten gehen aus der noch stärker vergrößerten Darstellung gemäß Figur 3 hervor.

Die Nockenscheibe 9 kann eine derartige Steuerkurve ausbilden, dass bei ihrem Verdrehen Bereiche der Nockenscheibe 9 nach innen in die Innenausnehmung 10 hinein vortreten.

In Figur 2 ist durch die strichpunktierte Kreislinie im Inneren der Innenausnehmung 10 der Außenumfang des zylindrischen Zentrierabschnittes 4 angedeutet. Es wird deutlich, dass beim Verdrehen der Nockenscheibe 9 sich der Grundkörper 1a schließlich selbsttätig auf dem Zentrierabschnitt 4 zentriert. Die Wirkungslinie der Nockenscheibe 9 sollte etwa auf der Winkelhalbierenden zu den beiden festen Vorsprüngen 11 liegen. Entsprechend dem Stand der Technik kann aber auch eine vollständig gleichmäßige Anordnung gewählt werden, so dass die Anlagekörper einen Winkelabstand von je ca. 120 Grad voneinander haben, die Winkel α und β gemäß Figur 2 also gleich groß sind. Es muss noch festgehalten werden, dass die Nockenscheibe 9 bei der Darstellung gemäß Figur 2 keine feste baulich ausgebildete Drehachse hat. Die beim Gleiten auf den Lagerstiften 13 zustande kommende Drehbewegung kann sogar einen geometrische Achse haben, die sich ständig verlagert.

Die Nockenscheibe 9 ist ein einfaches, flaches Bauteil, das sich leicht in einer kleinen taschenförmigen Ausnehmung 17 des Grundkörpers 1a unterbringen lässt. Die taschenförmige Ausnehmung kann sodann durch einen Deckel 18 verschlossen werden, wie das in Figur 3 dargestellt ist. Der Deckel 18 wird mittels Befestigungsschrauben 19 an dem Grundkörper 1a befestigt, von denen lediglich eine mittels ihrer Mittellinie angedeutet ist. Der Deckel 18 weist ferner eine Durchgriffsöffnung 20 auf, durch die die Eingriffsöffnung 14 in der Nockenscheibe 9 zugänglich wird. Figur 3 enthält zugleich die Darstellung eines Verdrehwerkzeuges 15 in Form eines Steckschlüssels (Inbus-Schlüssels), wobei die Verdrehrichtung durch den Pfeil 16 angedeutet ist. Es besteht die Möglichkeit, eine bestimmte Drehstellung der Nockenscheibe 9 zu fixieren, indem die Abmessungen derart gewählt werden, dass beim Festziehen der Befestigungsschrauben 19 der Deckel 18 eine Klemmwirkung auf die Nockenscheibe 9 ausübt. Zur Erleichterung des axialen Verschiebens und des Einschwenkens in den Zentrierkontakt hat die Nockenscheibe 9 eine gewölbte Mantellinie 21; es ergibt sich also eine ballige Kontur, welche mittig trägt.

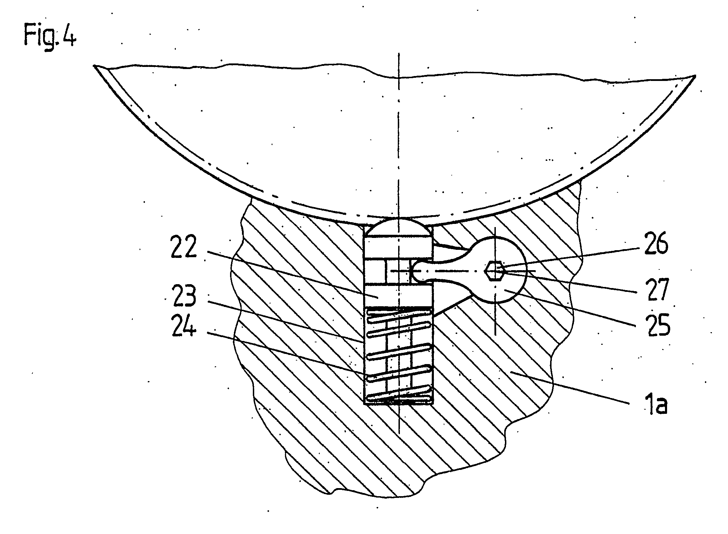

Eine Abwandlung des beweglich gelagerten Anstellgliedes ist aus Figur 4 ersichtlich. Danach ist das Anstellglied ein Stift 22, der in einer radial verlaufenden Bohrung 23 des Rotationsteiles 1 verschieblich gelagert ist. Eine Druckfeder 24, die hier als Schraubenfeder angedeutet ist, gibt dem Stift 22 eine Vorspannung in Richtung einwärts auf den Zentrierabschnitt 4 hin. Der Stift 22 hat einen abgesetzten Axialabschnitt, in den der Finger eines Schwenkhebels 25 eingreift. Der Schwenkhebel wird mit einer zylindrischen Kontur in einer Ausnehmung des Grundkörpers 1a schwenkbeweglich gelagert und weist ebenso wie die zuvor beschriebene Nockenscheibe 9 eine Eingriffsöffnung 26 für ein Verdrehwerkzeug aus. Ersichtlich kann der Schwenkhebel 25 durch Verschwenken um seine Schwenkachse 27 den Stift 22 aus seiner einwärts vorgeschobenen Stellung entgegen der Kraft der Druckfeder 24 in den Grundkörper 1a hinein zurückziehen. In zurückgezogener Stellung des Stiftes 22 ist somit ein axiales Bewegen des Grundkörpers 1a gegenüber dem Zentrierabschnitt 4 leicht möglich, während sich bei der Freigabe der Druckfeder 24 ein festes und genau zentriertes Fixieren der beiden Teile gegeneinander ergibt.

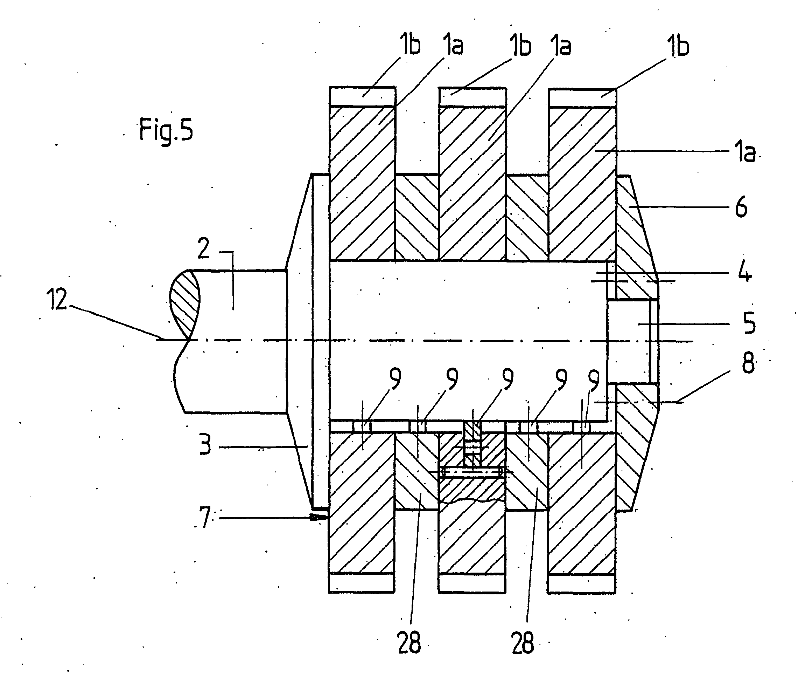

Die Figur 5 verdeutlicht, dass die erfindungsgemäß ausgebildete Spannvorrichtung nicht nur für einzelne Schleifscheiben oder deren Grundkörper 1a geeignet ist. Figur 5 zeigt eine Mehrfach-Schleifscheibe, bei der die einzelnen Grundkörper 1a durch Zwischenringe 28 axial voneinander beabstandet sind. Hierbei ist nicht nur jede einzelne Schleifscheibe mit festen Vorsprüngen und einer Nockenscheibe 9 ausgestattet; dasselbe ist auch bei den Zwischenringen 28 vorgesehen, die den Abstand zwischen den einzelnen Schleifscheiben herstellen. Das axiale Festspannen zwischen einem Anlageflansch 3 und einem Spannflansch 6 ist im Prinzip dasselbe wie bei der zuvor beschriebenen Ausführungsform. Man sieht jedoch, dass im Falle der Figur 5 die einzelnen Grundkörper 1a und die Zwischenringe 28 über eine größere axiale Länge auf dem Zentrierabschnitt 4 verschoben werden müssen. Die erfindungsgemäße Spannvorrichtung mit der Möglichkeit, den einen der drei Anlagekörper vorübergehend zurückzuziehen, ist dafür besonders geeignet. Auch hier muss nicht auf eine besondere Winkelstellung beim Aufschieben der Rotationsteile geachtet werden, was wegen der großen Zahl der aufzuschiebenden einzelnen Teile besonders vorteilhaft ist. Die weiteren in Figur 5 eingetragenen Bezugsziffern bezeichnen Teile, die mit den zuvor beschriebenen übereinstimmen.

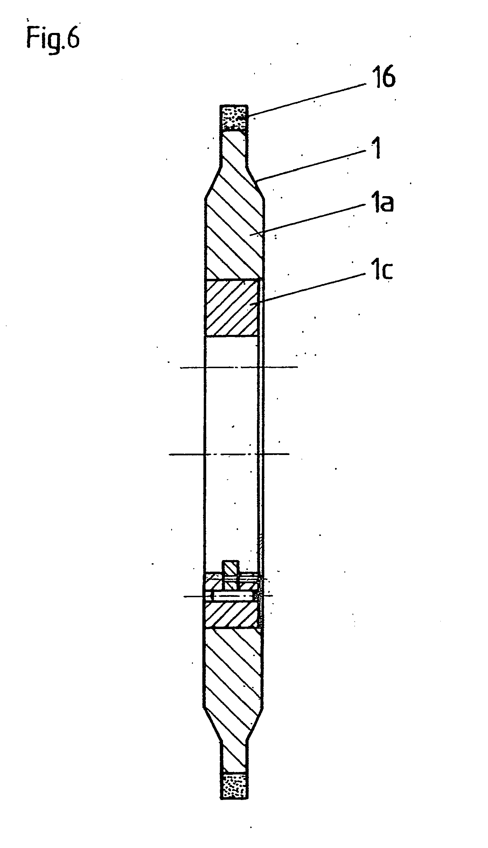

Und schließlich ist in Figur 6 eine Schleifscheibe in Kompositbauweise dargestellt. Die Schleifscheibe stellt das Rotationsteil 1 dar und weist einen Grundkörper 1a, einen Schleifbelag 1b und einen Innenring 1c auf, an welchem bzw. in welchem die eigentliche Zentriervorrichtung angeordnet bzw. ausgebildet ist. Dieser Innenring ist aus Metall ausgebildet, wohingegen der den Schleifbelag 1b tragende Grundkörper 1a aus Kunststoff ausgebildet ist. Es ist jedoch auch möglich, dass der Grundkörper ebenfalls aus einem Metall hergestellt ist, was auch von dem Material des Innenringes verschieden sein kann.

### Liste der Bezugsziffern

- 1: Rotationsteil
- 1a: Grundkörper
- 1b: Schleifbelag
- 1c: Innenring
- 2: Schleifspindelrotor
- 3: Anlageflansch
- 4: Zentrierabschnitt
- 5: Zentrierbund
- 6: Spannflansch
- 7: Planseite
- 8: Spannschraube
- 9: Nockenscheibe
- 10: Innenausnehmung
- 11: feste Vorsprünge
- 12: Rotationsachse
- 13: Lagerstift
- 14: Eingriffsöffnung
- 15: Verdrehwerkzeug
- 16: Pfeil für die Verdrehrichtung
- 17: Ausnehmung
- 18: Deckel
- 19: Befestigungsschraube
- 20: Durchgriffsöffnung
- 21: Mantellinie
- 22: Stift
- 23: Bohrung
- 24: Druckfeder
- 25: Schwenkhebel
- 26: Eingriffsöffnung
- 27: Schwenkachse
- 28: Zwischenring

## Patentansprüche

1. Spannvorrichtung mit einem an einem Schleifspindelrotor aufgenommenen Rotationsteil (1),
mit einem an dem Schleifspindelrotor ausgebildeten Zentrierabschnitt, der eine Innenausnehmung des Rotationsteiles durchsetzend dieses zentrierend aufnimmt,
mit gegenseitiger zentrierender Berührung zwischen der Innenausnehmung des Rotationsteiles und dem Zentrierabschnitt des Schleifspindelrotors über drei Anlagekörper, die im Winkelabstand voneinander angeordnet sind,
und mit einer lösbaren Einrichtung zum axialen Festspannen des Rotationsteiles auf dem Schleifspindelrotor,
**dadurch gekennzeichnet, dass**
zwei der drei Anlagekörper als feste Vorsprünge (11) des Rotationsteiles (1) ausgebildet sind, die in dessen Innenausnehmung (10) hineinragen, und dass der dritte Anlagekörper ein in dem Rotationsteil (1) beweglich gelagertes Anstellglied ist, welches zwischen einer radial nach außen, eingefahrenen, Position, oder einer radial nach innen, ausgefahrenen, Zentrierposition bewegbar ist,
wobei dessen Zentrierposition in bezug auf den Zentrierabschnitt (4) an dem Zentrierabschnitt (4) anliegend ist.

2. Spannvorrichtung nach Anspruch 1, **dadurch gekennzeichnet, dass** der Zentrierabschnitt (4) zylindrisch ausgebildet ist.

3. Spannvorrichtung nach Anspruch 1 oder 2, **dadurch gekennzeichnet, dass** das Anstellglied eine Nockenscheibe (9) ist, die in dem Rotationsteil (1) mit parallel zu dessen Rotationsachse (12) verlaufender Drehachse gelagert ist und eine Eingriffsöffnung (14) zum stirnseitigen Einführen eines Verdrehwerkzeuges (15) aufweist.

4. Spannvorrichtung nach Anspruch 3, **dadurch gekennzeichnet, dass** die Nockenscheibe (9) mit ihrer Außenkontur auf zwei Lagerstiften (13) abgestützt ist, die in dem Rotationsteil (1) parallel zu dessen Rotationsachse (12) angeordnet sind.

5. Spannvorrichtung nach einem der Ansprüche 1 bis 4, **dadurch gekennzeichnet, dass** das Anstellglied so ausgebildet ist, dass es hinsichtlich seiner Feststellung nach dessen Anlage am Zentrierabschnitt (4) selbsthemmend wirkt.

6. Spannvorrichtung nach Anspruch 1, **dadurch gekennzeichnet, dass** das Anstellglied ein mit einer Druckfeder (24) vorgespannter Stift (22) ist, der in einer radial verlaufenden Bohrung (23) des Rotationsteiles (23) verschieblich gelagert ist und in der Art eines Taststiftes am Zentrierabschnitt anliegt.

7. Spannvorrichtung nach Anspruch 6, **dadurch gekennzeichnet, dass** die Druckfeder (24) nach innen in die Innenausnehmung (10) hinein vorgespannt ist und dass an dem Stift (22) ein Schwenkhebel (25) angreift, der in dem Rotationsteil (1) mit parallel zu dessen Rotationsachse (12) verlaufender Schwenkachse (27) gelagert ist und eine Eingriffsöffnung (26) zum stirnseitigen Einführen eines Verdrehwerkzeuges (15) aufweist.

8. Spannvorrichtung nach einem der Ansprüche 3 bis 7, **dadurch gekennzeichnet, dass** die Nockenscheibe (9) oder der Schwenkhebel (25) in dem Rotationsteil (1) nach außen durch einen Deckel (18) abgedeckt ist, der eine Durchgriffsöffnung (20) für das Verdrehwerkzeug (15) aufweist.

9. Spannvorrichtung nach Anspruch 8, **dadurch gekennzeichnet, dass** der Deckel (18) zugleich als Feststellglied dient, das die Stellung der Nockenscheibe (9) oder des Schwenkhebels (25) fixiert.

10. Spannvorrichtung nach einem der vorhergehenden Ansprüche, **dadurch gekennzeichnet, dass** das Rotationsteil (1) eine Schleifscheibe, deren Grundkörper (1a) mit umfangsseitig angebrachtem Schleifbelag (1b) versehen ist, oder ein Zwischenring (28) eines aus mehreren Schleifscheiben aufgebauten zylinderförmigen Schleifkörpers ist.

11. Spannvorrichtung nach einem der vorhergehenden Ansprüche, **dadurch gekennzeichnet, dass** die beiden festen Vorsprünge (11) des Rotationsteiles (1) einstückig mit diesem ausgebildet sind, die Form von axial verlaufenden Erhebungen und im Querschnitt eine gewölbte Form aufweisen.

12. Spannvorrichtung nach einem der vorhergehenden Ansprüche, **dadurch gekennzeichnet, dass** das Anstellglied - in Richtung auf die Rotationsachse (12) des Rotationsteiles (1) - eine ballige Kontur hat.

13. Rotationsteil für eine Spannvorrichtung insbesondere nach einem der Ansprüche 1 bis 12, welches einen Grundkörper mit einer Innenausnehmung, aufweist, in welche sich drei Anlagekörper für eine Zentrierung auf Basis von drei Stellen radial erstrecken, wobei zwei Anlagekörper als feste Vorsprünge (11) ausgebildet sind,
**dadurch gekennzeichnet, dass**
der dritte Anlagekörper ein in dem Grundkörper beweglich gelagertes und radial in dessen Innenausnehmung hineinverstellbares Anstellglied ist, welches aus einer in den Grundkörper eingefahrenen Position in eine aus dem Grundkörper heraus in dessen Innenausnehmung hinein ausgefahrenen Zentrierposition bewegbar ist.

14. Rotationsteil nach Anspruch 13, in Form einer Schleifscheibe, **dadurch gekennzeichnet, dass** die Schleifscheibe als Kompositbauteil ausgebildet ist und einen Innenring (1c) aufweist, an welchem die drei Anlagekörper angebracht sind, welcher vom Grundkörper (1a) umschlossen und aus Metall ausgebildet ist.

## Claims

1. Clamping device having a rotary part (1) received on a grinding spindle rotor,
having, embodied on said grinding spindle rotor, a centering section that continuously centeringly receives a rotary part while passing through an interior recess thereof
having mutually centering contact between the interior recess of the rotary part and the centering section of the grinding spindle rotor via three support bodies that are disposed at an angular interval from one another;
and having a detachable device for securely axially clamping the rotary part on the grinding spindle rotor;
**characterized in that**
two of the three support bodies are embodied as fixed projections (11) of said rotary part (1) that project into its interior recess (10) and **in that** the third support body is an infeed member that is movably borne in said rotary part (1) and that can be moved between a radially outward position or a radially inward centering position,
whereby its centering position with respect to said centering section (4) is adjacent to said centering section (4).

2. Clamping device in accordance with claim 1, **characterized in that** said centering section (4) is cylindrical.

3. Clamping device in accordance with claim 1 or 2, **characterized in that** said infeed member is a cam disk (9) that is borne in said rotary part (1) with an axis of rotation parallel to its axis of rotation (12) and that has an engagement opening (14) for inserting a torsional tool (15) into the end face.

4. Clamping device in accordance with claim 3, **characterized in that** the exterior contour of said cam disk (9) is supported on two bearing pins (13) that are disposed in said rotary part (1) parallel to said axis of rotation (12) thereof.

5. Clamping device in accordance with any of claims 1 through 4, **characterized in that** said infeed member is embodied such that it is self-locking with respect to its fixation after it is positioned against said centering section (4).

6. Clamping device in accordance with claim 1, **characterized in that** said infeed member is a pin (22) that is pre-stressed with a compression spring (24) and that is displaceably borne in a radially running bore (23) of said rotary part (23) and that is adjacent to said centering section like a type of feeler.

7. Clamping device in accordance with claim 6, **characterized in that** said compression spring (24) is pre-stressed inwardly into said interior recess (10) and **in that** said pin (22) is engaged by a pivoting lever (25) that is borne in said rotary part (1) with a pivot axis (27) that runs parallel to its axis of rotation (12) and has an engagement opening (26) for inserting a torsional tool (15) into the end face.

8. Clamping device in accordance with any of claims 3 through 7, **characterized in that** said cam disk (9) or said pivoting lever (25) in said rotary part (1) is covered to the outside by a cover (18) that has an access opening (20) for said torsional tool (15).

9. Clamping device in accordance with claim 8, **characterized in that** said cover (18) can simultaneously act as fixing member, fixing the situation or position of said cam disk (9) or of said pivoting lever (25).

10. Clamping device in accordance with any of the foregoing claims, **characterized in that** said rotary part (1) is provided with a grinding wheel, the base body (1a) of which is provided with a circumferentially applied abrasive layer (1b), or an intermediate ring (28) of a cylindrical grinding body constructed of a plurality of grinding wheels.

11. Clamping device in accordance with any of the foregoing claims, **characterized in that** said two fixed projections (11) of said rotary part (1) are embodied integrally with the latter, have the shape of axially running elevations, and have an arched cross-sectional shape.

12. Clamping device in accordance with any of the foregoing claims, **characterized in that** said infeed member has a spherical contour in the direction of said axis of rotation (12) of said rotary part (1).

13. Rotary part for a clamping device in particular in accordance with any of claims 1 through 12 that has a base body with an interior recess in which three support bodies extend radially for centering based on three locations, whereby two support bodies are embodied as fixed projections (11),
**characterized in that**
the third support body is an infeed member that is movably borne in the base body and that can be radially adjusted in its interior recess and that can be moved out of a position inserted into the base body into a centering position withdrawn from the base body and inserted in its interior recess.

14. Rotary part in accordance with claim 13 in the form of a grinding wheel, **characterized in that** said grinding wheel is embodied as a composite component and has an interior ring (1 c) to which the three support bodies are attached, which is surrounded by said base body (1 a), and which comprises metal.

## Revendications

1. Dispositif de serrage avec une pièce de rotation (1) logée au niveau d'un rotor de broche de meulage,
avec une partie de centrage formée au niveau du rotor de la broche de meulage, qui traverse un évidement interne de la pièce de rotation afin de la centrer,
avec un contact de centrage mutuel entre l'évidement interne de la pièce de rotation et la partie de centrage du rotor de la broche de meulage par l'intermédiaire de trois corps d'appui disposés avec un intervalle angulaire entre eux,
et avec un dispositif amovible pour le serrage axial de la pièce de rotation sur le rotor de la broche de meulage,
**caractérisé en ce que**
deux des trois corps d'appui sont conçus comme des saillies fixes (11) de la pièce de rotation (1), qui dépassent dans son évidement interne (10) et **en ce que** le troisième corps d'appui est un élément de réglage logé de manière mobile dans la pièce de rotation (1), qui se déplace entre une position rentrée de manière radiale vers l'extérieur et une position de centrage sortie de manière radiale vers l'intérieur,
moyennant quoi sa position de centrage est proche de la partie de centrage (4).

2. Dispositif de serrage selon la revendication 1, **caractérisé en ce que** la partie de centrage (4) présente une forme cylindrique.

3. Dispositif de serrage selon la revendication 1 ou 2, **caractérisé en ce que** l'élément de réglage est un disque à cames (9) logé dans la pièce de rotation (1) avec un axe de rotation parallèle à l'axe de rotation (12) de celle-ci et **en ce qu'**il comprend une ouverture d'engrènement (14) pour l'insertion frontale d'un outil de rotation (15).

4. Dispositif de serrage selon la revendication 3, **caractérisé en ce que** le disque à cames (9) s'appuie, avec son contour extérieur, sur deux tenons (13) disposés dans la pièce de rotation (1) parallèlement à l'axe de rotation (12) de celle-ci.

5. Dispositif de serrage selon l'une des revendications 1 à 4, **caractérisé en ce que** l'élément de réglage est conçu de façon à ce qu'il agisse de manière autobloquante lors de son immobilisation après son appui sur la partie de centrage (4).

6. Dispositif de serrage selon la revendication 1, **caractérisé en ce que** l'élément de réglage est une tige (22) précontrainte par un ressort de compression (24), qui est logé de manière coulissante dans un alésage radial (23) de la pièce de rotation (1) et qui s'appuie sur la partie de centrage à la manière d'un palpeur.

7. Dispositif de serrage selon la revendication 6, **caractérisé en ce que** le ressort de compression (24) est précontraint vers l'intérieur dans l'évidement interne (10) et **en ce qu'**un levier de pivotement (25), qui est logé dans la pièce de rotation (1) avec un axe de pivotement (27) parallèle à l'axe de rotation (12) de celle-ci, s'engage sur la tige (22) et comprend une ouverture d'engrènement (26) pour l'insertion frontale d'un outil de rotation (15).

8. Dispositif de serrage selon l'une des revendications 3 à 7, **caractérisé en ce que** le disque à cames (9) ou le levier de pivotement (25) est recouvert, dans la pièce de rotation (1) par un couvercle (18) qui comprend une ouverture d'engrènement (20) pour l'outil de rotation (15).

9. Dispositif de serrage selon la revendication 8, **caractérisé en ce que** le couvercle (18) sert également d'élément de fixation qui fixe la position du disque à cames (9) ou du levier de pivotement (25).

10. Dispositif de serrage selon l'une des revendications précédentes, **caractérisé en ce que** la pièce de rotation (1) est un disque de meulage dont le corps de base (1a) est muni d'un revêtement de meulage sur la circonférence ou il s'agit d'une bague intercalaire (28) d'un corps de meulage cylindrique constitué de plusieurs disques de meulage.

11. Dispositif de serrage selon l'une des revendications précédentes, **caractérisé en ce que** les deux saillies fixes (11) de la pièce de rotation (1) sont réalisées d'un seul bloc avec celle-ci et **en ce qu'**elles présentent la forme de bosses axiales et une forme bombée en section transversale.

12. Dispositif de serrage selon l'une des revendications précédentes, **caractérisé en ce que** l'élément de réglage présente, dans la direction de l'axe de rotation (12) de la pièce de rotation (1), un contour bombé.

13. Pièce de rotation pour un dispositif de serrage selon l'une des revendications 1 à 12, qui comprend un corps de base avec un évidement interne dans lequel s'étendent radialement trois corps d'appui pour un centrage sur trois points, moyennant quoi deux corps d'appui étant conçus comme des saillies fixes (11), **caractérisée en ce que** le troisième corps d'appui est un élément de réglage logé de manière mobile radialement dans son évidement interne qui peut être déplacé d'une position rentrée dans le corps de base vers une position de centrage sortie du corps de base vers son évidement interne.

14. Pièce de rotation selon la revendication 13, se présentant sous la forme d'un disque de meulage, **caractérisé en ce que** le disque de meulage est conçu comme un composant composite et **en ce qu'**il comprend une bague interne (1c) sur laquelle sont fixés les trois corps d'appui, qui est entourée par le corps de base (1a) et qui est constituée de métal.
